# EUROPÄISCHE PATENTSCHRIFT

(11) **EP 0 668 207 B1**
(45) Veröffentlichungstag und Bekanntmachung des Hinweises auf die Patenterteilung: **15.07.1998**
(21) Anmeldenummer: 95101027.1
(22) Anmeldetag: 26.01.1995
(51) Int. Cl.: B62H 3/02, B62H 3/08

(54) **Ständer für Fahrräder**
Holder for bicycles
Support de bicyclettes

(30) Priorität: 22.02.1994 DE 9402916 U
(43) Veröffentlichungstag der Anmeldung: 23.08.1995
(73) Patentinhaber: EISEN- UND DRAHTWERK ERLAU AKTIENGESELLSCHAFT, D-73431 Aalen (DE)
(72) Erfinder: Müller, Anton, D-73432 Aalen (DE)
(74) Vertreter: Jackisch-Kohl, Anna-Katharina

(56) Entgegenhaltungen:
- DE-A- 3 822 455
- DE-C- 205 523
- DE-U- 9 213 089
- FR-A- 851 826
- NL-A- 9 300 615

## Beschreibung

Die Erfindung betrifft einen Ständer für Fahrräder nach dem Oberbegriff des Anspruches 1.

Bei einem bekannten Fahrradständer dieser Art (FR-A-851 826) sind zwei seitliche Standbeine über eine Querstrebe miteinander verbunden. An der Querstrebe sind mehrere Halter vorgesehen, die abwechselnd in entgegengesetzte Richtungen weisen. An den Haltern können Fahrräder mit ihrer Sattelstange über eine Öse des Halters arretiert werden. An diesem bekannten Ständer können nur am Boden abgestellte Fahrräder geparkt werden.

Der Erfindung liegt die Aufgabe zugrunde, einen Ständer dieser Art so auszubilden, daß an ihm auf kleinstem Raum und auf einfache Weise eine Vielzahl von Fahrrädern geparkt werden können.

Diese Aufgabe wird bei einem Ständer der gattungsbildenden Art erfindungsgemäß mit den kennzeichnenden Merkmalen des Anspruches 1 gelöst.

Infolge der erfindungsgemäßen Ausbildung des Fahrradständers mit einer zweiten oberen Querstrebe und daran vorgesehenen weiteren Haltern ist auf einfache Weise eine zweite Parketage für die Fahrräder geschaffen. Dadurch können auf kleinstem Raum sehr viele Fahrräder geparkt werden. Sie lassen sich in der zweiten Etage des Fahrradständers entsprechend wie in der ersten Etage mühelos auf der Standfläche parken und einwandfrei sichern. Durch die konstrtuktiv einfache Ausbildung des Ständers eignet er sich besonders für öffentliche Parkplätze, wo nur wenig Platz zur Aufbewahrung der Fahrräder zur Verfügung steht. Besonders eignet sich der Ständer zum Einsatz in Parkhäusern, Sportplätzen, Schulen, vor Bahnhöfen und dgl. An solchen Plätzen steht in der Regel nur ein geringer Parkraum zur Verfügung, der durch den erfindungsgemäßen Ständer optimal ausgenutzt werden kann.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert.

Es zeigt:
- Fig. 1: in Seitenansicht einen erfindungsgemäßen Fahrradständer zur Befestigung einer Vielzahl von Fahrrädern,
- Fig. 2: den Ständer nach Fig. 1 in Stirnansicht gemäß Pfeil II in Fig. 1, jedoch ohne die Fahrräder,
- Fig. 3: eine Draufsicht auf den Ständer nach Fig. 1 gemäß Pfeil III in Fig. 1.

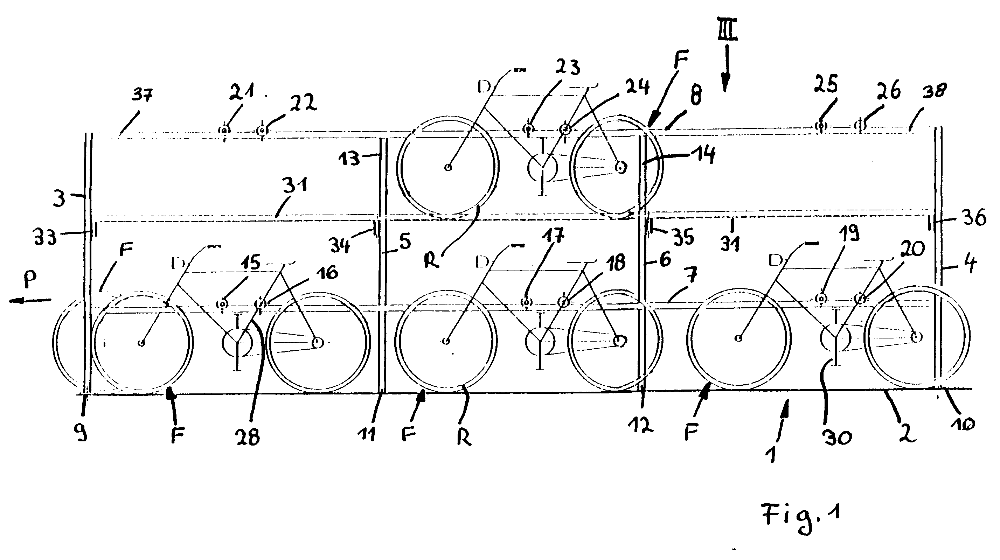

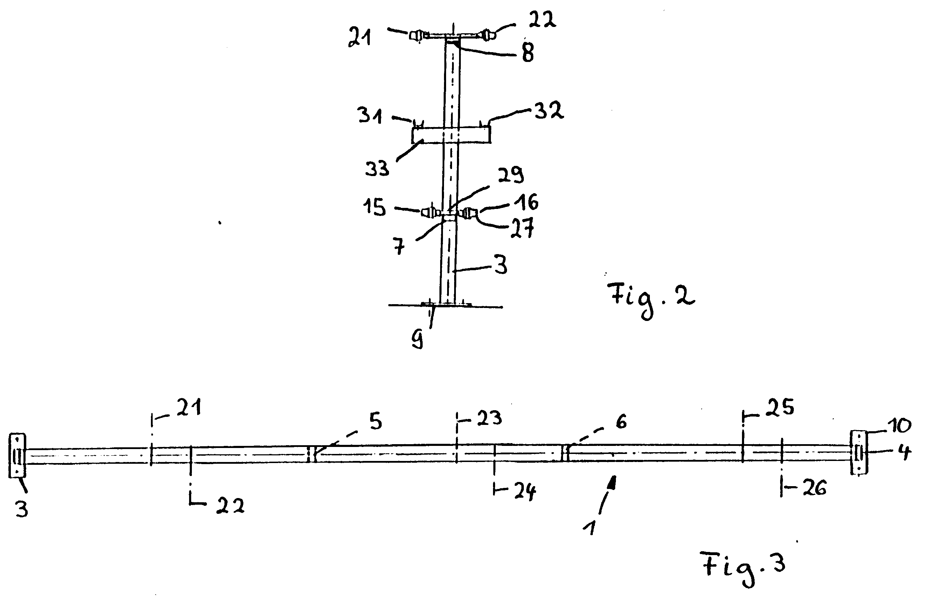

Die Fig. 1 bis 3 zeigen einen Fahrradständer 1, der auf einem Untergrund 2, wie einem Boden eines Schulhofes, eines Parkhauses, eines Sportplatzes, eines Bahnhofes oder dgl. angeordnet ist. Der Ständer 1 ist als zweigeschoßiges Gestell ausgebildet. Er hat Standbeine 3 bis 6, die senkrecht auf dem Boden 2 stehen und über im Ausführungsbeispiel zwei mit Abstand übereinander angeordnete Querstreben 7 und 8 zu dem Gestell miteinander verbunden sind. Die endseitigen Standbeine 3 und 4 sind auf rechteckigen Befestigungsplatten 5 und 10 verschweißt, mit denen sie auf dem Boden befestigt, vorzugsweise verschraubt sind. Die beiden anderen Standbeine 5 und 6, deren Abstand voneinander geringfügig kleiner ist als ihr Abstand von dem jeweils benachbarten Standbein 3 bzw. 4, stehen mit ihren unteren Enden 11 und 12 unmittelbar auf dem Boden 2. Die Standbeine 5, 6 können auch im Boden 2 verankert sein. Ebenso können die endseitigen Standbeine 3, 4 im Untergrund 2 befestigt sein. Die mittleren Standbeine 5, 6 können auch mit Befestigungsplatten versehen sein, mit denen sie auf dem Untergrund stehen.

Der Abstand zwischen den Standbeinen 3 und 5 bzw. 6 und 4 ist etwas größer als die Länge der im Ständer 1 zu parkenden Fahrräder F. Auf den oberen Enden 13 und 14 der Standbeine 5 und 6 ist die Querstrebe 8 verschweißt. Mit ihren freien Enden 37 und 38 ist die Querstrebe 8 zusätzlich an den Standbeinen 3, 4 verschweißt.

Die untere Querstrebe 7 kann aus einzelnen Abschnitten bestehen, die jeweils an den einander benachbarten Standbeinen 3 bis 6 verschweißt oder auf andere Weise befestigt sind. Es ist aber auch möglich, die Querstrebe 7 wie die Querstrebe 8 einteilig auszubilden. Die Standbeine 5 und 6 sind in diesem Fall aus einzelnen, an den Querstreben befestigten Abschnitten hergestellt. Die Standbeine 3 bis 6 und die Querstreben 7 und 8 sind vorzugsweise durch Stahlprofilrohre mit rechteckigem Hohlquerschnitt gebildet. Die Querstrebe 7 ist mit einem Abstand oberhalb des Bodens 2 vorgesehen, der geringfügig größer ist als der größte Abstand, den die Pedale 30 der Fahrräder F vom Boden 2 haben.

An den Querstreben 7 und 8 sind Halter 15 bis 26 befestigt, an denen jeweils ein zu parkendes Fahrrad F gesichert werden kann. Die Halter 15 bis 26 sind jeweils gleich und wie in dem DE-GM 92 13 089 beschrieben ausgebildet.

Sie haben ein Klemmteil 27 (vgl. den Halter 16 in Fig.2) mit (nicht dargestellten) Klemmschenkeln, die eine Klemmöffnung begrenzen, in die ein Mittel- bzw. Sattelrohr 28 des Fahrrades F zu dessen Sicherung gedrückt bzw. eingeschnappt werden muß. Der Halter 16 ist mit einem (nicht dargestellten) Steckteil in ein Halterohr 29 gesteckt und an diesem mit (nicht dargestellten) Sicherungsstiften oder dgl. gehalten. Mit dem Halterohr 29 ist der Halter 16 an der Querstrebe 7 befestigt, wie beispielsweise verschweißt, verschraubt oder dgl..

Zwischen den einander benachbarten Standbeinen 3 und 5; 5 und 6; 6 und 4 sind jeweils zwei Halter befestigt, die in entgegengesetzte Richtungen von den Querstreben 7 bzw. 8 seitlich abstehen. Die so gebildeten Haltepaare 15, 16; 17, 18; 19, 20; 21, 22; 23, 24 und 25, 26 können über ein gemeinsames Kalterohr miteinander verbunden sein. In diesem Fall haben die Halterohre jeweils etwa Z- oder S-Form. Die Kalter sind so angeordnet, daß die einen, in gleiche Richtung weisenden Halter 15, 17, 19, 21, 23 und 25 annähernd mittig zwischen den einander benachbarten Standbeinen 3, 4; 5, 6; 6, 4 liegen, während die anderen Halter 16, 18, 20, 22, 24, 26 jeweils in gleicher Richtung und mit relativ kleinem Abstand zu den anderen Haltern versetzt liegen. Dadurch ist gewährleistet, daß die Pedale 30 zweier nebeneinander auf verschiedenen Seiten am Ständer 1 befestigten Fahrräder F einander nicht berühren und dadurch beim Parken der Fahrräder stören können.

Die an den Haltern 15 bis 20 der Querstrebe 7 befestigten Fahrräder F (Fig. 1) lehnen in ihrer Parkstellung an der Querstrebe 7 an. Sie bildet somit eine Anlehnstange und kann, entsprechend wie die andere, obere Querstrebe 8 auch als Befestigungsstange für zusätzliche (nicht dargestellte) Diebstahlsicherungen, wie Ketten, Bügel und dgl. dienen. Diese Diebstahlsicherungen werden durch das Vorder- und/oder Hinterrad R der Fahrräder F gezogen und zudem um die entsprechende Querstrebe 7 bzw. 8 geschlungen und dann geschlossen.

Die auf der einen Seite an den Haltern 15, 17, 19, 21, 23, 25 befestigten und gegen Diebstahl gesicherten Fahrräder F sind wegen der versetzt zueinander angeordneten Halter entsprechend versetzt zueinander vorgesehen (Fig. 1).

Die an den Haltern 15 bis 20 der unteren Querstrebe 7 befestigten Fahrräder F stehen auf dem Boden 2, während die an Haltern 21 bis 26 befestigten Fahrräder in einer zweiten oberen Etage des Ständers 1 angeordnet sind. Sie stehen mit ihren Rädern R in U-Profilschienen 31 und 32 (Fig. 1, 2), die auf Trägern 33 bis 36 befestigt, wie verschweißt, verschraubt oder dgl. sind. Die Schienen 31, 32 sind in einer solchen Höhe vom Boden 2 und mit solchem Abstand von den auf dem Boden stehenden Fahrräderen F angeordnet, daß die Fahrräder in den Haltern 15 bis 20 der unteren Querstrebe 7 befestigt bzw. aus diesen herausgenommen werden können. Die Schienen 31, 32 sind gleich ausgebildet und erstrecken sich vorteilhaft über die ganze Länge des Ständers 1. Sie sind vorzugsweise gleich lang wie die Querstreben 7 und 8. Die Schienenöffnungen sind etwas größer als die Radbreite. Vorteilhaft erweitern sich die Aufnahmen der Schienen 31, 32 nach oben, so daß die Fahrräder F mit ihren Rädern R leicht von oben in die Schienen eingesetzt werden können. Die Träger 33 bis 36 sind ebenfalls gleich ausgebildet. Sie haben wie die Standbeine 3 bis 6 und die Querstreben 7 und 8 rechteckiges Hohlprofil und bestehen wie diese vorteilhaft aus Stahl. Die Halter 21 bis 26 haben von den Schienen 31, 32 einen Abstand, der etwa gleich dem Abstand der Halter 15 bis 20 vom Boden 2 ist.

Die Träger 33 bis 36 sind an den Standbeinen 3 bis 6 so befestigt, verschweißt, verschraubt oder dgl., daß sie mit ihrer einen Längsseite an den Standbeinen anliegen. Dadurch ist eine sichere, großflächige Befestigung der Träger sichergestellt. Die Länge der Träger 33 bis 36 entspricht etwa dem größten Abstand, den die Schienen 31 und 32 voneinander haben. Die an der oberen Querstrebe 8 befestigten Halter 21 bis 26 liegen etwa senkrecht oberhalb der Schienen 31 und 32. Der Abstand der Halter 21 bis 26 von der Querstrebe 8 ist etwas größer als der der Halter 15 bis 20 von der unteren Querstrebe 7, so daß die in der oberen Etage angeordneten Fahrräder F nicht an der Querstrebe 8 anlehnen. Sie haben durch die Aufnahme ihrer Räder R in den Schienen 31 und 32 eine ausreichende Standfestigkeit und Kippsicherheit. Die Querstrebe 8 kann als Befestigungsstange für zusätzliche Sicherungsteile für die Fahrräder F dienen.

Durch den größeren Abstand der Halter 21 bis 26 von der Querstrebe 8 sind die zugehörigen Halterohre entsprechend länger.

Die Träger 33 bis 36 bzw. die Schienen 31, 32 sind mit solchem Abstand an den Standbeinen 3 bis 6 befestigt, daß bei montiertem Fahrrad F dessen Räder R in den Schienen liegen und ihr Sattelrohr in den entsprechenden Halter gedrückt werden kann. Das Fahrrad F ist dadurch sicher am Ständer arretiert. Vorteilhaft sind die Träger 33 bis 36 und die Schienen 31, 32 in einem Abstand von ca. einem Meter über dem Boden 2 befestigt. Dadurch kann der Benutzer das Fahrrad in der oberen Etage ohne besondere Anstrengung am Ständer parken und sichern. Die Fahrräder müssen dadurch nicht besonders hoch angehoben werden.

An jedem Halter 15 bis 26 kann jeweils ein Fahrrad F geparkt werden. Vorteilhaft wird zunächst an jedem Halter 15 bis 20 der unteren Parketage ein Fahrrad F angeordnet, das parallel zum Ständer 1 an die Querstrebe 7 angelehnt und mit seinem Sattelrohr 28 in den zugehörigen Halter 15 bis 20 geschnappt wird. Danach kann das jeweilige Fahrrad F mit einem zusätzlichen Sicherungsteil an der Querstrebe 7 gesichert werden. Das Sicherungsteil kann hierzu durch ein Rad R des Fahrrades und um die Querstrebe 7 geschlungen werden. Wenn die untere Parketage besetzt ist, können weitere Fahrräder F problemlos ohne besondere Anstrengung in der oberen Etage geparkt und gesichert werden. Das Fahrrad F muß lediglich so weit angehoben werden, daß es mit seinen Rädern R in die Schienen 31 bzw. 32 gestellt werden kann. Da die Schienen mit nur geringem Abstand oberhalb des unteren Fahrrades F angeordnet sind, muß das Fahrrad nicht besonders hoch angehoben werden, so daß es für den Fahrer keiner besonderen Anstrengung bedarf. Wenn das Fahrrad F in die betreffende Schiene 31, 32 gestellt worden ist, braucht es nur noch mit seiner Sattelstange 28 in die Öffnung des betreffenden Halters 21 bis 26 gedrückt zu werden. Das Fahrrad F kann dann mit dem zusätzlichen Sicherungsteil an der Querstrebe 8 - entsprechend wie die Fahrräder F an der Querstrebe 7 - gesichert werden.

Das Gestell bzw. der Ständer 1 läßt sich einfach und kostengünstig im Baukastenprinzip aus den Standbeinen 3 bis 6 und aus den Querstreben 7 und 8 herstellen. Je nach Aufstellort kann der Ständer 1 unterschiedlich lang sein. In den Haltern 15 bis 26 sind die Fahrräder F klemmend gehalten, so daß sie sicher stehen und bsp. bei starkem Wind nicht umfallen. Im Ständer 1 können die Fahrräder eng neben- und übereinander geparkt werden, so daß sich der Ständer dort empfiehlt, wo wenig Aufstellplatz zur Verfügung steht.

## Patentansprüche

1. Ständer für Fahrräder mit stirnseitigen, mit Abstand voneinander angeordneten, aufwärts gerichteten Standbeinen (3, 4), die über eine Querstrebe (7) miteinander verbunden sind, über die mit Abstand voneinander angeordnete, in entgegengesetzte Richtungen weisende Kalter (15 bis 20) seitlich vorstehen,
dadurch gekennzeichnet, daß zwischen den stirnseitigen Standbeinen (3, 4) weitere Standbeine (5, 6) und mindestens eine weitere, mit Abstand oberhalb der einen Querstrebe (7) liegende Querstrebe (8) vorgesehen sind, daß an den Querstreben (7, 8) zwischen jeweils einander benachbarten Standbeinen (3 bis 6) jeweils die paarweise angeordneten Halter (15 bis 26) liegen, und daß den Haltern (21 bis 26) der weiteren Querstrebe (8) mindestens eine Standfläche (31, 32) für die Fahrräder (F) zugeordnet ist.

2. Ständer nach Anspruch 1,
dadurch gekennzeichnet, daß der eine Halter (15, 17, 19, 21, 23, 25) der paarweise angeordneten Halter (15, 16; 17, 18; 19, 20; 21, 22; 23, 24; 25, 26) etwa in halber Länge zwischen benachbarten Standbeinen (3, 5; 5, 6; 6, 4) liegt.

3. Ständer nach Anspruch 1 oder 2,
dadurch gekennzeichnet, daß die Halter (21 bis 26) der weiteren Querstrebe (8) von dieser geringfügig größeren Abstand haben als die Halter (15 bis 20) von der unteren Querstrebe (7).

4. Ständer nach einem der Ansprüche 1 bis 3,
dadurch gekennzeichnet, daß die Halter (21 bis 26) der weiteren Querstrebe (8) mit einem dem Abstand der unteren Querstrebe (7) vom Boden (2) entsprechenden Abstand oberhalb der Standflächen (31, 32) angeordnet sind, die vorteilhaft als U-Profilschienen ausgebildet sind.

5. Ständer nach einem der Ansprüche 1 bis 4,
dadurch gekennzeichnet, daß unterhalb jeder Reihe von Haltern (21, 23, 25 bzw. 22, 24, 26), die auf verschiedenen Seiten des Ständers (1) liegen, jeweils eine Standfläche (31 und 32) vorgesehen ist.

6. Ständer nach einem der Ansprüche 1 bis 5,
dadurch gekennzeichnet, daß die Standflächen (31, 32) auf gleicher Höhe und mit Abstand oberhalb der an der unteren Querstrebe (7) geparkten Fahrräder (F) liegen, und daß sich vorzugsweise die lichte Weite der Standflächen (31, 32) nach oben erweitert.

7. Ständer nach einem der Ansprüche 1 bis 6,
dadurch gekennzeichnet, daß die Standflächen (31 und 32) an Trägern (33 bis 36) befestigt sind, und daß an jedem Standbein (3 bis 6) vorzugsweise jeweils mindestens ein Träger (33 bis 36) befestigt ist, der quer, vorzugsweise senkrecht, über die Standbeine (3 bis 6) ragt.

8. Ständer nach Anspruch 7,
dadurch gekennzeichnet, daß die Länge der Träger (33 bis 36), in Stirnansicht auf den Ständer (1) gesehen, etwa gleich dem Abstand zweier paarweise angeordneter Halter (15 bis 26) voneinander ist.

9. Ständer nach einem der Ansprüche 1 bis 8,
dadurch gekennzeichnet, daß die Standflächen (31, 32) etwa gleiche Länge wie die Querstreben (7, 8) haben, und daß sich vorzugsweise die Querstreben (7, 8) und/oder die Standflächen (31, 32) im wesentlichen über die ganze Länge des Ständers (1) erstrecken.

10. Ständer nach einem der Ansprüche 1 bis 9,
dadurch gekennzeichnet, daß die Standbeine (3 bis 6) und/oder die Querstreben (7, 8) und/oder die Träger (33 bis 36) Hohlprofilstangen mit vorzugsweise rechteckigem Querschnitt sind und vorzugsweise aus Stahl bestehen.

## Claims

1. A stand for bicycles, comprising end supporting posts (3, 4) spaced apart and extending upwards and interconnected by a crossbar (7), by means of which spaced holders (15 to 20) project laterally in opposite directions, characterised in that further supporting posts (5, 6) and at least one further crossbar (8), arranged at a distance above the crossbar (7), are provided between the end supporting posts (3, 4), in that the holders (15 to 26) are arranged in pairs on the crossbars (7, 8) between adjacent supporting posts (3 to 6), and in that at least one supporting surface (31, 32) for the bicycles (F) is associated with the holders (21 to 26) of the further crossbar (8).

2. A stand according to claim 1, characterised in that one holder (15, 17, 19, 21, 23, 25) of the pairs of holders (15, 16; 17, 18; 19, 20; 21, 22; 23, 24; 25, 26) is arranged substantially halfway between adjacent supporting posts (3,5; 5, 6; 6, 4).

3. A stand according to claim 1 or 2, characterised in that the distance between the holders (21 to 26) and the further crossbar (8) is slightly greater than the distance between the holders (15 to 20) and the lower crossbar (7).

4. A stand according to any one of claims 1 to 3, characterised in that the holders (21 to 26) of the further crossbar (8) are arranged at a distance above the supporting surfaces (31, 32) corresponding to the distance of the lower crossbar (7) from the ground (2), the supporting surfaces (31, 32) advantageously being formed as U-shaped rails.

5. A stand according to any one of claims 1 to 4, characterised in that a supporting surface (31 and 32) is provided below each row of holders (21, 23, 25 and 22, 24, 26), which are arranged on different sides of the stand (1).

6. A stand according to any one of claims 1 to 5, characterised in that the supporting surfaces (31, 32) are arranged at the same height and at a distance above the bicycles (F) parked on the lower crossbar (7), and in that the inside width of the supporting surfaces (31, 32) preferably increases upwards.

7. A stand according to any one of claims 1 to 6, characterised in that the supporting surfaces (31 and 32) are fixed to carriers (33 to 36), and in that at least one carrier (33 to 36) is preferably fixed to each supporting post (3 to 6) and projects transversely, preferably perpendicularly beyond the supporting posts (3 to 6).

8. A stand according to claim 7, characterised in that the length of the carriers (33 to 36), viewed from the end of the stand (1), is substantially equal to the distance between two holders (15 to 26) arranged in pairs.

9. A stand according to any one of claims 1 to 8, characterised in that the supporting surfaces (31, 32) are substantially the same length as the crossbars (7, 8), and in that the crossbars (7, 8) and/or the supporting surfaces (31, 32) preferably extend substantially over the entire length of the stand (1).

10. A stand according to any one of claims 1 to 9, characterised in that the supporting posts (3 to 6) and/or the crossbars (7, 8) and/or the carriers (33 to 36) are hollow profiled bars preferably of rectangular cross-section and preferably made of steel.

## Revendications

1. Support pour bicyclettes, comportant des jambes de support (3, 4) agencées à distance l'une de l'autre et dirigées vers le haut, qui sont reliées l'une à l'autre via une traverse (7), au-delà de laquelle font saillie latéralement des éléments de maintien (15 à 20) agencés à distance les uns des autres et dirigés dans des directions opposées, caractérisé en ce qu'il est prévu entre les jambes de support (3, 4) côté frontal d'autres jambes de support (5, 6) et au moins une autre traverse (8) située à distance au-dessus de ladite traverse (7), en ce que les éléments de maintien (15 à 26) agencés par paires se trouvent respectivement sur les traverses (7, 8) entre des jambes de support (3 à 6) respectivement voisines les unes des autres, et en ce qu'au moins une surface de support (31, 32) pour bicyclettes (F) est associée aux éléments de maintien (21 à 26) de l'autre traverse (8).

2. Support selon la revendication 1, caractérisé en ce que l'un des éléments de maintien (15, 17, 19, 21, 23, 25) des éléments de maintien agencés par paires (15, 16; 17, 18; 19, 20; 21, 22; 23, 24 ; 25, 26) se trouve approximativement à mi-longueur entre des jambes de support voisines (3, 5 ; 5, 6; 6, 4).

3. Support selon l'une ou l'autre des revendications 1 et 2, caractérisé en ce que les éléments de maintien (21 à 26) de l'autre traverse (8) présentent une distance légèrement plus grande de celle-ci que les éléments de maintien (15 à 20) de la traverse inférieure (7).

4. Support selon l'une quelconque des revendications 1 à 3, caractérisé en ce que les éléments de maintien (21 à 26) de l'autre traverse (8) sont agencés au-dessus des surfaces de support (31, 32), réalisées avantageusement sous forme de rails profilés en U, à une distance qui correspond à la distance de la traverse inférieure (7) du sol (2).

5. Support selon l'une quelconque des revendications 1 à 4, caractérisé en ce qu'il est prévu une surface de support respective (31 et 32) au-dessous de chaque rangée d'éléments de maintien (21, 32, 25 ou 22, 24, 26) qui se trouvent sur différents côtés du support (1).

6. Support selon l'une quelconque des revendications 1 à 5, caractérisé en ce que les surfaces de support (31, 32) se trouvent à la même hauteur et à distance au-dessus des bicyclettes (F) stationnées sur la traverse inférieure (7), et en ce que la largeur libre des surfaces de support (31, 32) va de préférence en s'élargissant vers le haut.

7. Support selon l'une quelconque des revendications 1 à 6, caractérisé en ce que les surfaces de support (31 et 32) sont fixées sur des éléments porteurs (33 à 36), et en ce que de préférence au moins un élément porteur respectif (33 à 36) est fixé sur chaque jambe de support (3 à 6) et dépasse transversalement, de préférence verticalement, au-delà des jambes de support (3 à 6).

8. Support selon la revendication 7, caractérisé en ce que la longueur des éléments porteurs (33 à 36) est, en vue frontale sur le support (1), approximativement égale à la distance mutuelle de deux éléments de maintien agencés par paires (15 à 26).

9. Support selon l'une quelconque des revendications 1 à 8, caractérisé en ce que les surfaces de support (31, 32) présentent une longueur approximativement égale à celle des traverses (7, 8), et en ce que les traverses (7, 8) et/ou les surfaces de support (31, 32) s'étendent de préférence sensiblement sur toute la longueur du support (1).

10. Support selon l'une quelconque des revendications 1 à 9, caractérisé en ce que les jambes de support (3 à 6) et/ou les traverses (7, 8) et/ou les éléments porteurs (33 à 36) sont des barres profilées creuses d'une section transversale préférablement rectangulaire et sont constitués de préférence en acier.
